# EUROPÄISCHE PATENTSCHRIFT

(11) **EP 0 536 670 B1**
(45) Veröffentlichungstag und Bekanntmachung des Hinweises auf die Patenterteilung: **22.07.1998**
(21) Anmeldenummer: 92116963.7
(22) Anmeldetag: 05.10.1992
(51) Int. Cl.: B32B 5/28, B32B 27/36

(54) **Verbundkörper aus Träger- und Dekorschicht und Verfahren zu seiner Herstellung**
Laminate with support and decorative layer, and process for its manufacture
Stratifié avec support et couche décorative et procédé pour sa fabrication

(30) Priorität: 10.10.1991 DE 4133600
(43) Veröffentlichungstag der Anmeldung: 14.04.1993
(73) Patentinhaber: Ticona GmbH, 65926 Frankfurt am Main (DE)
(72) Erfinder: Gübitz, Franz, W-6233 Kelkheim (Taunus) (DE); Nething, Jean-Pierre, W-6233 Kelkheim (Taunus) (DE); Schremmer, Mathias, W-6230 Frankfurt/Main 80 (DE)

(56) Entgegenhaltungen:
- EP-A- 0 035 251
- EP-A- 0 305 219
- DE-A- 2 829 707

## Beschreibung

Die Erfindung bezieht sich auf einen Verbundkörper der im wesentlichen aus thermoplastischem Polyester besteht, und der aus einer Trägerschicht und einer Dekorschicht mit textiler Oberfläche aufgebaut ist.

Die hierbei in Frage kommenden Konstruktionselemente und Bauteile müssen je nach ihrer Anwendung einer oder mehreren der folgenden Anforderungen genügen:
Sie müssen dekorativ und/oder stoßabsorbierend sein, attraktive Griffeigenschaften haben und sicherheitstechnischen Aspekten Rechnung tragen.
Bei Anwendungen im Kfz-Innenraum werden an die Formkörper noch weiter zusätzliche Anforderungen gestellt wie geringe Wärmealterung, UV-Stabilität, Scheuerbeständigkeit guten Polstand und Wärmeformbeständigkeit.

Einige Beispiele aus der Praxis für Verbundkörper sind z. B. Rückenlehnenverkleidungen von Sitzmöbeln, Schmuckschachtelverkleidungen und aus dem Kfz-Bereich z. B. Säulen- und Türseitenverkleidungen.

Für diese Konstruktionen wurden bisher meist Kombinationen folgender Werkstoffe verwendet: Acrylinitril-Butadien-Styrol-Polymerisate (ABS), Polyphenylenoxid (PPO) - Blends, Polyvinylchlorid (PVC), Polyurethan (PU), Polypropylen (PP), Polymethylmethacrylat sowie Holzfaserformstoffe als Trägermaterialien in Kombination mit Textilien. Das textile Oberflächenmaterial wird üblicherweise per Klebkaschierung auf das massive Trägermaterial aufgebracht.

Inzwischen ist die Entsorgung und das Recycling von Kunststoffteilen inbesondere im Automobilbereich zu einem zentralen Thema geworden. Viele Konzepte zur Wiederaufbereitung und Wiederverwertung von Kunststoffabfällen wurden bereits entwickelt. Probleme bereitet jedoch das Recyclisieren von Verbundsystemen, bei denen die Einzelkomponenten aus unterschiedlichen Polymeren bestehen. Unter diesem Aspekt wurden deshalb Konstruktionen angestrebt, die vollständig aus der gleichen Werkstoffsorte bestehen.
Die Einschränkung auf eine einzige Werkstoffsorte führte jedoch zwangsläufig zu einer Einschränkung der realisierbaren Kombination technischer Daten der daraus hergestellten Verbundmaterialien.

Es wurde nun gefunden, daß man zu gut recyclisierbaren Verbundwerkstoffen aus Träger- und Dekorschichten gelangen kann, die ein breites Spektrum vorteilhafter technischer Eigenschaften abdecken und daß es dabei nicht erforderlich ist, vollständig auf den Einsatz technisch vorteilhafter Hilfs-, Zuschlag- oder Modifizierungszusätze zu verzichten, wenn man als Kunststoffbasis Polyestermaterialien einsetzt und Dekor- und Trägerschicht durch einen Schmelzprozeß miteinander verankert.

Die Erfindung betrifft somit einen Verbundkörper aus
einer massiven Trägerschicht aus einem Polyestermaterial, das bis zu 50 Gew.%, vorzugsweise 5 bis 25 Gew.-%, bezogen auf das Gesamtgewicht der Polymermaterialien, eines anderen, damit kompatiblen Polymermaterials und ggf. bis zu 50 Gew.%, vorzugsweise 10 bis 40 Gew.-%, bezogen auf das Gesamtgewicht der Mischung, verstärkende und/oder füllende Zuschlagstoffe und weitere Hilfsmittel enthalten kann und
einer Dekorschicht, die ggf. aus mehreren Lagen die Optik und/oder Haptik beeinflussender Materialien aufgebaut ist, die alle im wesentlichen aus Polyestermaterial bestehen,
wobei die Trägerschicht mit der mit ihr in Berührung stehenden Materiallage der Dekorschicht in der Berührungsfläche unlösbar verankert ist und
die Schichten in ihrer Gesamtheit eine solche Zusammensetzung haben, daß eine homogene Mischung der gleichen Zusammensetzung erneut zur Herstellung eines Kunststoff-Konstruktionselements mit ausreichenden mechanischen Daten eingesetzt werden kann.

Vorzugsweise sollen die Schichten in ihrer Gesamtheit eine solche Zusammensetzung haben, daß eine homogene Mischung der gleichen Zusammensetzung erneut zur Herstellung einer Trägerschicht eines erfindungsgemäßen Verbundkörpers mit ausreichenden mechanischen Daten eingesetzt werden kann.

Je nach Anforderung an die Optik, Haptik und stoßabsorbierenden Verhalten kann das Dekor mehrschichtig, z. B. aus textiler Oberfläche, einer Zwischenschicht aus einem leicht verformbaren, elastischen, voluminösen, d.h. in der Regel 0,5 bis 5,0 mm starken Flächengebilde wie z.B. einer Weichschaumplatte oder einem entsprechend dicken Vliesstoff aus Stapel- oder Endlosfasern, und ggf. einem Kaschierfutter, aufgebaut sein.

Für die Trägerschicht kann, je nach den gegebenen Anforderungen, als Werkstoff ein normaler thermoplastischer Polyester oder ein mit Verstärkungs-, Füllstoff- oder/und Elastomerzuschlägen modifiziertes Polyestermaterial eingesetzt werden.
Dabei kommen grundsätzlich alle bekannten kristallisierfähigen, linearen oder schwach verzweigten Polyester in Frage, wie sie beispielweise in R.E. Wilfong, J. Polymer Sci. 54, Seite 385-410 (1961) oder in Ullmanns Enzyklopädie der technischen Chemie (4. Aufl.) Bd.19, Seite 61-68 (1980), beschrieben sind.
Geeignet für die Trägerschicht sind Polyester, die im wesentlichen aus aromatischen Dicarbonsäuren wie z. B. Phthalsäure oder Isophthalsäure, 1,4-, 1,5- oder 2,6-Naphthalindicarbonsäure, Hydroxycarbonsäuren wie z.B. para-(2-Hydroxyethyl)-benzoesäure und aliphatischen Diolen mit 2 bis 6, vorzugsweise 2 bis 4 Kohlenstoffatomen wie z. B. Ethylenglykol, 1,3-Propandiol oder 1,4-Butandiol durch Cokondensation erhalten werden. Diese Polyester-Rohmaterialien können auch durch Einkondensieren geringerer Anteile aliphatischer Dicarbonsäuren wie z. B. Glutarsäure, Adipinsäure oder Sebacinsäure oder von Polyglykolen wie z.B. Diethylenglykol (2,2-Dihydroxydiethylether), Triethylenglykol (1,2-Di-(2-hydroxyethoxy)-ethan) oder auch von geringeren Anteilen höhermolekularer Polyethylenglykole modifiziert werden.

Geeignet sind ferner Polyester, die als Säurekomponenten neben Terephthalsäure bis zu 20 Molprozent, vorzugsweise bis zu 10 Molprozent andere aromatische, araliphatische oder aliphatische Dicarbonsäuren und/oder bis zu 2 Molprozent, vorzugsweise bis zu 1 Molprozent, tri- oder mehrfunktionelle Carbonsäuren enthalten und/oder die als Diolkomponente neben Butylenglykol oder vorzugsweise Ethylenglykol bis zu 20 Molprozent, vorzugsweise bis zu 10 Molprozent aromatische, araliphatische, oder andere aliphatische Diole und/oder bis zu 2 Molprozent, vorzugsweise bis zu 1 Molprozent, tri- oder mehrfunktionelle Alkohole enthaften.

Zu den hier angesprochenen Dicarbonsäuren und den tri- oder mehrfunktionellen Carbonsäuren gehören zum Beispiel Isophthalsäure, Phthalsäure, alkylsubstituierte Phthalsäuren, alkylsubstituierte Isophthalsäuren oder alkylsubstituierte Terephthalsäuren, Naphthalin-dicarbonsäuren, wie z. B. 2,6-Naphthalin-dicarbonsäure, 2,7-Naphthalin-dicarbonsäure, aliphatische Dicarbonsäuren, wie z. B. Bernsteinsäure, Adipinsäure, Sebacinsäure oder Dekandicarbonsäure, alicyclische Dicarbonsäuren wie z.B. Cyclohexandicarbonsäuren, Trimesinsäure, Trimellithsäure oder Pyromellithsäure.

Zu den oben angesprochenen Diolkomponenten oder den tri- oder mehrfunktionellen Alkoholen gehören zum Beispiel Trimethylenglykol, 1,2-Propandiol, Hexamethylenglykol, Neopentylglykol, Di- oder Triethylenglykol, 1,4-Cyclohexan-dimethanol, 1,4-Bis-hydroxymethyl-cyclohexan, Di- oder Polyhydroxybenzole, wie z.B. Hydrochinon oder Resorcin, Bisphenole, wie z.B. Bisphenol A, Bisphenol F, und aromatische Diole, wie z. B. Etherdiole aus Bisphenolen und Glykolen, Trimethylolpropan oder Pentaerythrit. Als Diolkomponenten können ferner lineare Oligo- bzw. Polyester oder Oligo- bzw. Polyether mit je zwei endständigen Hydroxylgruppen und Molekulargewichten bis zu 10 000 oder vorzugsweise bis zu 5000, besonders bevorzugt bis 2000 gewählt werden. Hierzu gehören zum Beispiel Polytetrahydrofurane und Polyethylenoxide mit Molekulargewichten von 400 bis 2000. Statt oder zusätzlich zu diesen Cokomponenten kann der erfindungsgemäß einzusetzende Polyester auch bis zu 20 Molprozent, vorzugsweise bis zu 10 Molprozent, Hydroxycarbonsäuren, wie z. B.ε-Hydroxy-capronsäure, Hydroxybenzoesäuren, Hydroxyethylbenzoesäuren oder Hydroxyethoxybenzoesäuren enthalten.
Neben den Homopolyestern und den Copolyestern auf Basis von Polybutylenterephthalat oder Polyethylenterephthalat selbst kann als Polyester auch eine Mischung der Homo- und Copolyester, wie z. B. ein Gemisch aus Polybutylenterephthalat und Polyethylenterephthalat, oder auch Gemische eines oder mehrerer der angesprochenen Homo- oder Copolyester mit mindestens einem weiteren Polyester, wie z. B. Gemische aus Polyethylenterephthalat und einem Polyester auf Basis Bisphenol A / Isophthalsäure / Terephthalsäure, zum Einsatz kommen.

Bevorzugt sind jedoch Polyethylenterephthalat (PET), Polybutylenterephthalat (PBT), sonstige Polyalkylenterephthalate (PTP), hochschlagzähes Polybutylenterephthalat (HI-PBT, thermoplastiches Polyesterelastomer (TPE) und flüssigkristalline Polyester (LCP).
Ein anderer Polyester, der erfindungsgemäß auch eingesetzt werden kann, ist zum Beispiel Poly-(cyclohexan-1,4-dimethylol)-terephthalat.

Die oben definierten Polyester können selbstverständlich in reiner Form zu der Trägerschicht der erfindungsgemäßen Verbundkörper verarbeitet werden oder sie können untereinander in beliebigen Verhältnissen gemischt werden.
Aus technischen Gründen kann es bevorzugt sein, überwiegend einheitliche Polymere einzusetzen. So können z.B. Polyethylenterephthalat als besonders bevorzugter Polyester in reiner Form, oder gemischt mit vorzugsweise weniger als 50 Gew.% Polybutylenterephthalat zur Herstellung der Trägerschicht benutzt werden.
Es ist jedoch überraschenderweise auch möglich, ohne nennenswerte Nachteile für die spätere Recyclisierung Mischungen der oben definierten Polyester mit bis zu 50 Gew.%, bezogen auf das Mischungsgewicht, anderer kompatibler Polymere und/oder Elastomere einzusetzen.

Kompatible Polymere, die nicht der Gruppe der Polyester angehören, und dennoch mit den oben definierten Polyestern gemischt werden können sind beispielsweise Polycarbonate, Acrylnitril-Butadien-Styrol-Copolymere, oder Methyl-methacrylat-Butadien-Styrol-Copolymere.

Die Polyester und die Mischungen der Polyester mit den genannten kompatiblen Polymeren können mit oder ohne verstärkende oder füllende Zuschlagstoffe eingesetzt werden. Als Zuschlagstoffe werden Talkum, Kreide, Glasfasern, Glaskugeln, Holzmehl, Silikate von z.B. Magnesium und/oder Aluminium, Tonerden, Ruße, Bariumsulfat, Calciumsulfat, feinteilige oder faserige elementare Metalle, Whisker, Wollastonit, Dolomit, Cellulose in üblichen und erforderlichen Mengen, von 0 bis 50 Gew.-%, vorzugsweise 10 bis 40 Gew.-%, bezogen auf das Gewicht der gesamten Mischung eingesetzt.

Den Polyestern und den oben genannten gefüllten oder ungefüllten Polymermischungen können noch die üblichen Zusätze wie Licht- und Wärmestabilisatoren und -costabilisatoren, Farbmittel, Pigmente, Gleitmittel, Flammschutzmittel, Treibmittel, und/oder chemische Kopplungssysteme zwischen Polyester und Zuschlagstoffen zugesetzt werden.

Als Polyester kommen neben neu produzierten ("jungfräulichen") Produkten auch Recyclisate der 1., 2. und höherer Generation sowie Gemische aus jungfräulichen Produkten und Recyclisaten aller oben beschriebenen Polyester, die ggf. Zuschlagstoffe und Zusätze enthalten und/oder durch Beimischung anderer kompatibler Polymere modifiziert sind, zum Einsatz. Das Recyclisat kann aus Kfz-Teilen, Getränkeflaschen, Textilabfällen und dergleichen stammen.

Die Dekorschicht bestimmt das äußere Erscheinungsbild, insbesondere die Optik und die Haptik der erfindungsgemäßen Verbundkörper.
Sie besteht aus einem, oder enthält als äußere Lage ein die Optik und den Griff bestimmendes Textilmaterial.
In die Dekorschicht können jedoch auch Lagen aus Materialien, die die Haptik der Verbundkörper weiter verbessern, eingebracht werden.
Zur Verbesserung der Haftung der Dekorschicht auf dem Trägermaterial des Verbundkörpers kann die Dekorschicht eine unmittelbar an das Trägermaterial angrenzende Lage eines weiteren Textilmaterials, ein sogenanntes "Kaschierfutter" aufweisen.

Die feste Verankerung der Dekorschicht auf der Trägerschicht erfolgt durch Verschmelzen der aneinander grenzenden Flächen beider Schichten oder, vorzugsweise, durch Penetration geschmolzener Trägermasse in eine nicht geschmolzene angrenzende Fläche der Dekorschicht.

Vorzugsweise weist der erfindungsgemäße Verbundkörper eine ein-bis dreilagige Dekorschicht auf, wobei die äußere Lage aus einem textilen Material besteht.
Besonders bevorzugt sind erfindungsgemäße Verbundkörper, die eine zwei- oder dreilagige Dekorschicht aufweisen, wobei die äußere Lage aus einem textilen Material und eine Lage aus einem Schaumstoff besteht.

Die einzelnen Lagen der Dekorschicht sind durch Klebstoffe oder durch Verschweißen miteinander verbunden. Geeignete Klebstoffe sind bekannte Polymerdispersionen, vorzugsweise aber bekannte Schmelzkleber, auf Polyester-, Styrol/Butadien-, Polychloropren- oder insbesondere auf Polyurethanbasis, wie sie beispielsweise in Ullmann, Encyclopädie der technischen Chemie, 4.Auflage, Bd 14, Seite 227-268, insbesondere Seite 257, beschrieben sind.
Das Verschweißen erfolgt durch anschmelzen der zu verbindenden Flächen und darauffolgendes Anpressen, z.B. durch Flammbondieren.
Die Klebe- bzw. Schweißverbindung kann vollflächig erfolgen oder es können über die zu verklebenden Flächen statistisch oder rapportmäßig gleichmäßig verteilte Klebestellen oder Schweißstellen erzeugt werden.

Als Textilmaterial der Dekorschicht kommen grundsätzlich alle textilen Flächen in Betracht, die auf einem Polyester-Träger wie oben beschrieben verankert oder mit einem Weichschaumstoff verbunden werden können und je nach der Art des Verbundkörpers dreidimensional verformbar sind.

Die textile Lage der Dekorschicht besteht aus Polyestergarnen, die vorzugsweise aus solchen Polyestern bestehen, die aus Dicarbonsäuren wie z. B. Terephthalsäure, Isophthalsäure oder Phthalsäure, 1,4-, 1,5- oder 2,6-Naphthalindicarbonsäure, Hydroxycarbonsäuren wie z. B. para-(2-Hydroxyethyl)benzoesäure und aliphatischen Diolen mit 2 bis 6, vorzugsweise 2 bis 4 Kohlenstoffatomen wie z. B. Ethylenglykol, 1,3-Propandiol oder 1,4-Butandiol durch Cokondensation erhalten werden. Diese Polyester-Rohmaterialien können auch durch Einkondensieren geringerer Anteile aliphatischer Dicarbonsäuren wie z. B. Glutarsäure, Adipinsäure oder Sebacinsäure oder von Polyglykolen wie z. B. Diethylenglykol (2,2-Dihydroxydiethyl-ether), Triethylenglykol (1,2-Di-(2-hydroxy-ethoxy)ethan) oder auch von geringeren Anteilen höhermolekularer Polyethylenglykole modifiziert werden.

Vorzugsweise besteht die textile Lage der erfindungsgemäßen Verbundkörper aus einem Polyester mit mindestens 85 Mol% Ethylenterephthalat-Kettengliedern. Besonders bevorzugt sind Textillagen aus reinem oder höchstens zu 5 Mol% modifiziertem Polyethylenterephthalat.

Bei den in dieser Erfindung als Dekormaterial eingesetzten textilen Flächengebilden werden im wesentlichen solche, die nach dem Web-, Strick-, Wirk-, Nadel- oder Tuftingverfahren hergestellt sind, eingesetzt.
Nicht gewebte Textilien aus Polyester, sogenannte Vliesstoffe aus Stapelfasern oder Endlosfilameten können ebenfalls als Dekormaterial verwendet werden. Fadengelege, die textilähnliche Flächen bilden, gehören ebenfalls zu den möglichen Gruppen von Dekormaterialien.

Als Materialien, die die Haptik der Verbundkörper weiter verbessern können, sind Lagen aus bekannten Polyurethanschäumen (PUR-Schäume) auf Basis von Hydroxylgruppen enthaltenden Polyestern oder Polyethern (Polyester- oder Polyether-Diolen) gut geeignet.
Einzelheiten über gut geeignete PUR-Schäume können beispielsweise Ullmann, Encyklopädie der technischen Chemie, 4.Aufl., Bd.19, Seite 301 ff. insbesondere Seite 317 ff entnommen werden.

Weiterhin eignen sich zur Verbesserung der Haptik auch relativ dicke (voluminöse), nicht gewebte Textilien aus Polyesterfasern, insbesondere solche, die in an sich bekannter Weise vorverfestigt worden sind, wie z.B. Vliesstoffe aus Stapelfasern oder Endlosfilamenten, die nach dem Gelege-, Krempel- oder Vernadelungsverfahren hergestellt werden.

Das zur Verbesserung der Haftung der Dekormaterialien auf dem Trägermaterial gegebenenfalls vorhandene Kaschierfutter ist ein Textilmaterial, das nach dem Web-, Strick- und Wirkprozess hergestellt wird oder es besteht aus einem nichtgewebten Textil, einem sogenannten Vliesstoff, aus Stapelfasern oder Endlosfilamenten.
Das Fasermaterial des Kaschierfutters besteht vorzugsweise aus solchen Polyestern, wie sie für die Dekormaterialien beschrieben wurden, im Einzelfall vorzugsweise aus dem gleichen Fasermaterial wie das Textilmaterial der Dekorlage.

Besonders bevozugt sind erfindungsgemäße Verbundkörper, die bezüglich des darin enthaltenen Polymermaterials sortenrein sind, d.h. die nur aus Polyestern der oben angegebenen Definition bestehen.

Gegenstand der Erfindung ist auch ein Verfahren zur Herstellung des oben beschriebenen Verbundkörpers aus thermoplastischem Polyester, bestehend aus mindestens einer massiven Trägerschicht und einer Dekorschicht, bei dem in einem für Thermoplaste üblichen Verarbeitungsverfahren Trägerschicht und Dekorschicht zusammengebracht und unlösbar miteinander verbunden werden.

Bei diesem Verfahren wird die feste und dauerhafte Verbindung zwischen Trägerschicht und Dekorschicht durch direktes Hinterspritzen des textilen Dekormaterials mit den für die Trägerschicht vorgesehenen, aufgeschmolzenen thermoplastischen Polyestern erreicht.

Für das erfindungsgemäße Verfahren werden Spritzgußmaschinen eingesetzt, die eine Temperaturregelung mit einer Genauigkeit von +/- 10°C gestatten, und die mit entsprechenden Spritzgießwerkzeugen ausgestattet sind.
Die Spritztemperatur wird auf 20 bis 100°C, vorzugsweise auf 30 bis 60°C über dem Beginn der Erweichungstemperatur des Trägermaterials eingestellt.
In der Regel liegt die Verarbeitungstemperatur der zur Herstellung der Trägerschicht eingesetzten Polymermaterialien, auf die die Spritztemperatur einzustellen ist, bei 230 bis 280°C.

Besonders vorteilhaft ist eine automatische Zuführung der bahnenförmigen Dekorfläche zur Spritzgußmaschine.

Die Materialien für die Trägerschicht und die Dekorschicht werden im Rahmen der oben angegebenen Spezifikationen und Strukturmerkmale so ausgewählt, daß eine homogene Mischung der gleichen Zusammensetzung erneut zur Herstellung eines Kunststoff-Konstruktionselements mit ausreichenden mechanischen Daten eingesetzt werden kann.
Dabei kann erfindungsgemäß so gearbeitet werden, daß ein jungfräulicher Homopolyester oder Copolyester mit oder ohne Verstärkungs-, Füllstoff-, Elastomer- und Blendzuschläge sowie Stabilisatorzusätze eingesetzt wird.
Es ist aber ebensogut möglich, für die Herstellung der Trägerschicht Recyclisat-Polyester oder recyclisathaltige Polyester einzusetzen.

In einer weiteren bevorzugten Ausführungsform des erfindungsgemäßen Verfahrens werden die Materialien für die Trägerschicht und die Dekorschicht im Rahmen der oben angegebenen Spezifikationen und Strukturmerkmale so ausgewählt, daß ein sortenreiner Kunststoff-Verbundkörper erhalten wird.

Die folgenden Ausführungsbeispiele veranschaulichen die Erfindung.

### Beispiel 1

Eine Kfz-Lenksäulenverkleidung wurde hergestellt aus einem mit 30 Gew.-% Glasfaser verstärkten Polyethylenterephthalat (PET) als Trägerschicht und einem textilen Flachgewebe aus Polyethylenterephthalat (PET) mit einer 2,5 mm dicken Schaumstoffzwischenschicht als Dekorschicht. Die Verbindung von Träger- und Dekorschicht erfolgte nach dem Spritzgußprozess durch Hinterspritzen der Dekorschicht mit plastifiziertem Polyester in einem Spritzgußwerkzeug. Die Polyesterschmelze besaß eine Temperatur von 260 bis 270°C. Die mittlere Wanddicke der Trägerschicht beträgt 2,5 mm. Ein spezifischer Spritzdruck und Nachdruck wurde bei 215 bar eingestellt.

### Beispiel 2

In gleicher Verfahrensweise wie im Beispiel 1 wurde aus einem Polybutylenterephthalat (PBT) als Trägerschicht und einem textilen Rundstrickgewebe, einer 1,5 mm dicken Schaumstoffzwischenschicht und einem Polyester-Kaschierfutter aus Polyethylenterephthalat (PET) eine Hutablage hergestellt. Die Polyesterschmelze besaß eine Massetemperatur von 250°C. Die mittlere Wanddicke der Trägerschicht beträgt 2 mm. Der spezifische Spritzdruck beträgt 185 bar, der spezifische Nachdruck 200 bar.

Die hergestellte Hutablage wurde in einer Mühle zerkleinert. Das gewonnene Polyesterrecyclisat wurde zu 100 % erneut wieder für die Herstellung der Hutablage-Trägerschicht eingesetzt. Anhand von Prüfkörpern, die diesen Hutablagen entnommen wurden, war gegenüber Prüfkörpern von Hutablagen, die mit jungfräulichem Polybutylenterephthalat (PBT) für die Trägerschicht hergestellt wurden, erkennbar, daß eine wesentliche Veränderung in den mechanischen Eigenschaften Zugfestigkeit und Zähigkeit nicht aufgetreten ist. Insbesondere gilt dies auch für die Formbeständigkeit in der Wärme.

Hutablagen, die sowohl aus jungfräulichen Polyester als auch aus Polyesterrecyclat hergestellt wurden, konnten unveränderte Qualitätsanforderungen erfüllen. Neben Hutablagen mit Trägerschichten aus 100 % Recyclisat wurden Versuche mit Abmischungen mit einem Anteil von 20, 30, 50 und 70 % jungfräulichem Polybutylenterephthalat (PBT) und Recyclisat vorgenommen. Die Prüfwerte für Zugfestigkeiten und Zähigkeiten lagen, wie erwartet, zwischen den Werten für Hutablagen aus jungfräulichen PBT-Granulat und 100 % Polyester-Regranulat.

### Beispiel 3

Eine muldenförmige Ablage für eine Kfz-Mittelkonsole wird in 2 Prozeßstufen aus einer Mehrschicht-Dekor-Schicht und einer Polyester-Trägerschicht als Verbundkörper hergestellt.
Die Mehrschicht-Dekor-Schicht besteht aus einer textilen Dekor -Oberschicht aus Polyethylenterephthalat (PET), einer Polyester -Schaumschicht von 2,5 mm Dicke und einem Kaschierfutter, die durch flammbondieren miteinander verbunden wurden. Die bahnenförmige Dekorschicht wird einem Kalander zugeführt. Die in einem Extruder mit 60 mm Schnecken-Nenndurchmesser und 120 cm -Breitschlitzdüse plastifizierte hochschlagzähe Polybutylenterephthalat-Schmelze (HI-PBT) von 250°C Massetemperatur wird auf die Unterschicht der Dekorschicht extrudiert. Nach Abkühlen der Trägerschicht von 3 mm Dicke werden aus der endlosen, textildekor-beschichtete Platte Abschnitte von jeweils 32 cm Länge und 17 cm Breite geschnitten.
Die so hergestellte rechteckige Platte des Verbundkörpers wird auf der Trägerschichtseite durch Strahlungserwärmung bis zu einer erforderlichen Trägerschichttiefe von 2-3 mm bei einer Heizelementetemperatur von 500 bis 550°C innerhalb von 7 bis 15 Sekunden bis zum Erweichungspunkt bei ca. 210°C erwärmt. Durch die sehr schnelle Erwärmung wird eine Schädigung des Dekors unterbunden, da in der Schaumstoffzwischenschicht ein sehr hoher Temperaturgradient vorhanden ist. Die muldenförmige Ablage für die Kfz-Mittelkonsole wird nun in einem Matrizen-Patrizen-Werkzeug durch Umformen des Verbundkörpers erzeugt.

### Beispiel 4

Eine Kfz-Türseitenverkleidung wurde durch Hinterspritzen einer Dekorschicht mit Schaumstofflage mit einem plastifizierten, mit 20 Gew.-% Glaskugeln verstärkten Polyethylenterephthalat (PET)-Recyclisat nach dem Spritzgußprozeß in einem Spritzgußwerkzeug hergestellt. Die Polyesterschmelze besaß eine Temperatur von 260 bis 270°C. Die Wanddicke der Trägerschicht betrug 3,0 mm.

Das PET-Recyclisat der Trägerschicht wurde aus PET-Mehrweg-Getränke - Flaschen, die bereits mehrmals befüllt worden waren, gewonnen. Diese Flaschen wurden zerkleinert, gewaschen, getrocknet und gemahlen. Das Roh-Recyclisat wird mit 0,2 Gew.-% Natriummontanat als Nukleierungsmittel und mit 20 % Glaskugeln zu einem spritzgußfähigen Compound verarbeitet und dann für die Trägerschicht eingesetzt. Aus dem Material für den Extrusionsblasprozeß der Flaschenherstellung wird somit ein für der Spritzgußprozeß geeignetes Material.

### Beispiel 5

Eine Bürostuhl-Rückenlehne wurde aus einem Polybutylenterephthalat (PBT) als Trägerschicht und einer Dekor-Oberschicht, bestehend aus einem textilem Rundgestricke aus Polyethylenterephthalat, einer 4 mm dicken Schaumstoffzwischenschicht und einem Kaschierfutter, die durch Verschweißen miteinander verbunden waren, nach dem Spritzgußprozeß durch Hinterspritzen des Dekormaterials mit dem plastifizierten Polyester in einem Spritzgußwerkzeug hergestellt.
Die Polyesterschmelze besaß eine Massentemperatur von 250°C. Die mittlere Wanddicke der Trägerschicht betrug 2,4 mm. Der spezifische Spritzdruck betrug 155 bar, der spezifische Nachdruck 160 bar.

In gleicher Verfahrensweise wie in Beispiel 2 wurde nun die Bürostuhl-Rückenlehne einem Recyclingprozeß unterworfen. Sowohl bei teilweiser Abmischung von Recyclisat mit jungfräulichem Polybutylenterephthalat (PBT) als auch bei 100 %-igem Recyclisat-Einsatz konnte vier mal der Recyclingprozess durchlaufen werden, mit dem Ergebnis, daß die stets unveränderten Qualitätsanforderungen an die Rückenlehne jedesmal erfüllt werden konnten.

Das Bürostuhl-Rückenlehnen-Recyclisat wurde in einem weiteren Versuch mit 45 Gew.-% eines Polypropylenrecyclisats und Kompatibilisatoren zu einem Polyester-Polypropylen-Blend verarbeitet. Damit hergestellte Rückenlehnen konnten ebenfalls die bereits beim Polyester-Recyclisat angesetzten, unveränderten Qualitätsanforderungen erfüllen.

## Patentansprüche

1. Verbundkörper aus einer massiven Trägerschicht und einer Dekorschicht, wobei die Trägerschicht
a) aus einem Polyestermaterial,
b) einem anderen mit dem Polyestermaterial a) kompatiblen Polymermaterial, dessen Anteil nicht höher als, 50 Gew.-%, bezogen auf das Gesamtgewicht der Polymermaterialien, ist,
c) ggf. aus bis zu 50 Gew.-%, bezogen auf das Gesamtgewicht der Mischung, verstärkenden und/oder füllenden Zuschlagstoffen und
d) ggf weiteren Hilfsmitteln besteht,
und die Dekorschicht, aus einer oder mehreren Lagen aufgebaut ist, wobei die Dekorschicht selbst bzw. die ggf. vorhandene äußere Lage der Dekorschicht aus einem die Optik und Haptik beeinflussenden Material aufgebaut ist, wobei das die Optik und Haptik bestimmende Textilmaterial aus Polyestergarn besteht und eine ggf. vorhandene, Lage aus einer die Haptik beeinflussenden Schaumstoffschicht aus Polyester-Schaum oder aus Polyurethan-Schaum besteht, wobei die Trägerschicht mit der mit ihr in Berührung stehenden Materiallage der Dekorschicht in der Berührungsfläche unlösbar verankert ist und die Schichten in ihrer Gesamtheit eine solche Zusammensetzung haben, daß eine Mischung der gleichen Zusammensetzung herstellbar ist, die erneut zur Herstellung eines Kunststoff-Konstruktionselements mit ausreichenden mechanischen Daten eingesetzt werden kann.

2. Verbundkörper gemäß Anspruch 1, dadurch gekennzeichnet, daß der Verbundkörper eine ein-bis dreilagige Dekorschicht aufweist, wobei die äußere Lage aus einem textilen Material besteht.

3. Verbundkörper gemäß Anspruch 1, dadurch gekennzeichnet, daß der Verbundkörper eine zwei- oder dreilagige Dekorschicht aufweist, wobei die äußere Lage aus einem textilen Material und eine Lage aus einem Schaumstoff besteht.

4. Verbundkörper gemäß mindestens einem der Ansprüche 1 bis 3, dadurch gekennzeichnet, daß die einzelnen Lagen der Dekorschicht durch Verkleben oder Verschweißen miteinander verbunden sind.

5. Verbundkörper gemäß mindestens einem der Ansprüche 1 bis 4, dadurch gekennzeichnet, daß die Trägerschicht aus jungfräulichem Homopolyester oder Copolyester mit oder ohne Verstärkungs-, Füllstoff-, Elastomer- und Blendzuschläge sowie Stabilisatorzusätze besteht.

6. Verbundkörper gemäß mindestens einem der Ansprüche 1 bis 4, dadurch gekennzeichnet, daß die Trägerschicht aus Recyclisat-Polyester oder aus recyclisathaltigem Polyester besteht.

7. Verbundkörper gemäß mindestens einem der Ansprüche 1 bis 4, dadurch gekennzeichnet, daß der Verbundkörper bezüglich des darin enthaltenen Polymermaterials sortenrein ist.

8. Verfahren zur Herstellung des Verbundkörpers des Anspruchs 1, dadurch gekennzeichnet, daß in einem für Thermoplaste üblichen Verarbeitungsverfahren eine Trägerschicht der im Anspruch 1 angegebenen Zusammensetzung und eine Dekorschicht der im Anspruch 1 angegebenen Zusammensetzung zusammengebracht und unlösbar miteinander verankert werden.

9. Verfahren gemäß Anspruch 8, dadurch gekennzeichnet, daß die feste und dauerhafte Verankerung zwischen Trägerschicht und Dekorschicht durch direktes Hinterspritzen des textilen Dekormaterials mit den für die Trägerschicht vorgesehenen, aufgeschmolzenen thermoplastischen Polyestern erreicht wird.

10. Verfahren gemäß mindestens einem der Ansprüche 8 und 9, dadurch gekennzeichnet, daß die Materialien für die Trägerschicht und die Dekorschicht im Rahmen der oben angegebenen Spezifikationen und Strukturmerkmale so ausgewählt werden, daß eine homogene Mischung der gleichen Zusammensetzung erneut zur Herstellung eines Kunststoff-mit ausreichenden mechanischen Daten eingesetzt werden kann.

11. Verfahren gemäß mindestens einem der Ansprüche 8 bis 10, dadurch gekennzeichnet, daß ein jungfräulicher Homopolyester oder Copolyester mit oder ohne Verstärkungs-, Füllstoff-, Elastomer- und Blendzuschläge sowie Stabilisatorzusätze eingesetzt wird.

12. Verfahren gemäß mindestens einem der Ansprüche 8 bis 11, dadurch gekennzeichnet, daß für die Herstellung der Trägerschicht Recyclisat-Polyester oder recyclisathaltige Polyester eingesetzt werden.

## Claims

1. A composite article of a massive carrier layer and a decorative layer, the carrier layer comprising
a) a polyester material,
b) another polymer material which is compatible with the polyester material a), whose proportion is not higher than 50 % by weight, based on the total weight of the polymer materials,
c) if appropriate up to 50 % by weight, based on the total weight of the mixture, of reinforcing and/or filling additives and
d) if appropriate further auxiliaries,
and the decorative layer being built up from one or more laminae, the decorative layer itself or the optionally present outer lamina of the decorative layer being built up from a material which influences the visual properties and haptic properties, the textile material which determines the visual properties and haptic properties comprising polyester yarn and an optionally present lamina of a foam layer which influences the haptic properties, comprising polyester foam or polyurethane foam, the carrier layer being anchored undetachably in the contact area with the lamina of material of the decorative layer which is in contact with it, and the layers in their entirety having a composition such that a mixture of the same composition can be prepared, which can be employed again to produce a structural element of plastic which has adequate mechanical data.

2. A composite article as claimed in claim 1, wherein the composite article has a one- to three-layered decorative layer, the outer layer comprising a textile material.

3. A composite article as claimed in claim 1, wherein the composite article has a two- or three-layered decorative layer, the outer layer comprising a textile material and one layer comprising a foam.

4. A composite article as claimed in at least one of claims 1 to 3, wherein the individual layers of the decorative layer are joined to one another by gluing or welding.

5. A composite article as claimed in at least one of claims 1 to 4, wherein the carrier layer comprises virgin homopolyester or copolyester with or without reinforcing, filler, elastomer and blend additions and stabilizer additives.

6. A composite article as claimed in at least one of claims 1 to 4, wherein the carrier layer comprises recycled polyester or polyester containing recycled product.

7. A composite article as claimed in at least one of claims 1 to 4, wherein the composite article is of a pure type with respect to the polymer material contained therein.

8. A process for the production of the composite article of claim 1, which comprises bringing together a carrier layer of the composition stated in claim 1 and a decorative layer of the composition stated in claim 1 and anchoring them to one another undetachably in a processing process customary for thermoplastics.

9. The process as claimed in claim 8, wherein firm and permanent anchoring between the carrier layer and decorative layer is achieved by injection molding the molten thermoplastic polyesters intended for the carrier layer directly onto the back of the textile decorative material.

10. The process as claimed in at least one of claims 8 and 9, wherein the materials for the carrier layer and the decorative layer are chosen within the framework of the abovementioned specifications and structural features such that a homogeneous mixture of the same composition can be employed again to produce a structural element of plastic which has adequate mechanical data.

11. The process as claimed in at least one of claims 8 to 10, wherein a virgin homopolyester or copolyester with or without reinforcing, filler, elastomer and blend additions and stabilizer additives is employed.

12. The process as claimed in at least one of claims 8 to 11, wherein recycled polyesters or polyesters containing recycled product are employed for production of the carrier layer.

## Revendications

1. Stratifié constitué d'une couche de support massive et d'un revêtement décoratif, dans lequel le revêtement décoratif consiste en
a) un matériau polyester
b) un autre matériau polymère, compatible avec le matériau polyester a), dont la proportion n'excède pas 50% du poids total des matériaux polymères,
c) éventuellement jusqu'à 50% en poids, par rapport au poids total du mélange, d'adjuvants de renforcement et/ou de charge, et
d) éventuellement, d'autres auxiliaires,
et le revêtement décoratif est constitué d'une ou plusieurs couches, le revêtement décoratif lui-même ou la couche extérieure du revêtement décoratif éventuellement présente étant constitués d'un matériau influençant l'apparence ou le toucher, le matériau textile déterminant l'apparence et le toucher étant constitué de fils de polyester et une couche éventuellement présente consistant en une couche de mousse influençant le toucher étant constituée d'une mousse de polyester ou de polyuréthane, la couche de support étant liée de manière indissociable dans la surface de contact à la couche de matériau du revêtement décoratif qui entre en contact avec elle, et les couches ayant dans leur ensemble une composition telle qu'on puisse préparer un mélange de même composition pouvant être réutilisé pour la fabrication d'un élément constructif en matière plastique présentant des propriétés mécaniques suffisantes.

2. Stratifié selon la revendication 1, caractérisé en ce que le stratifié présente un revêtement décoratif comprenant de 1 à 3 couches, la couche extérieure étant constituée d'un matériau textile.

3. Stratifié selon la revendication 1, caractérisé en ce que le stratifié présente un revêtement décoratif comprenant 2 ou 3 couches, la couche extérieure étant constituée d'un matériau textile, et une couche consistant en une mousse.

4. Stratifié selon au moins l'une des revendications 1 à 3, caractérisé en ce que les différentes couches du revêtement décoratif sont liées les unes aux autres par collage ou par soudage.

5. Stratifié selon au moins l'une des revendications 1 à 4, caractérisé en ce que la couche de support est constituée d'un homopolyester ou copolyester vierge, avec ou sans additifs de renforcement, de charge, élastomères et de mélange ainsi que stabilisants.

6. Stratifié selon au moins l'une des revendications 1 à 4, caractérisé en ce que la couche de support est constituée d'un polyester recyclé ou d'un polyester contenant du recyclat.

7. Stratifié selon au moins l'une des revendications 1 à 4, caractérisé en ce que le stratifié est pur en ce qui concerne les types de matériaux polymères qu'il contient.

8. Procédé pour la fabrication du stratifié de la revendication 1, caractérisé en ce qu'on assemble et lie indissociablement l'un à l'autre une couche de support présentant la composition indiquée à la revendication 1 et un revêtement décoratif présentant la composition indiquée à la revendication 1, selon un procédé usuel de transformation de matériaux thermoplastiques.

9. Procédé selon la revendication 8, caractérisé en ce que le lien ferme et durable entre la couche de support et le revêtement décoratif est obtenu par rétro-injection directe, sur le matériau décoratif, du polyester thermoplastique fondu prévu pour la couche de support.

10. Procédé selon au moins l'une des revendications 8 et 9, caractérisé en ce que les matériaux de la couche de support et du revêtement décoratif sont choisis, dans le cadre des spécifications et caractéristiques structurelles susmentionnées, de telle façon qu'un mélange homogène de même composition puisse être réutilisé pour la fabrication d'un élément constructif en matière plastique présentant des propriétés mécaniques suffisantes.

11. Procédé selon au moins l'une des revendications 8 à 10, caractérisé en ce qu'on utilise un homopolyester ou un copolyester vierge, avec ou sans additifs de renforcement, de charge, élastomères et de mélange ainsi que stabilisants.

12. Procédé selon au moins l'une des revendications 8 à 11, caractérisé en ce qu'on utilise, pour la fabrication de la couche de support, un polyester recyclé ou un polyester contenant du recyclat.
